# EUROPEAN PATENT SPECIFICATION

(11) **EP 1 375 319 B1**
(45) Date of publication and mention of the grant of the patent: **11.05.2005**
(21) Application number: 02254310.2
(22) Date of filing: 20.06.2002
(51) Int. Cl.: B62J 6/06

(54) **Light-generating bicycle pedal**
Leuchtpedal für ein Fahrrad
Pédale avec dispositif d'éclairage pour une bicyclette

(43) Date of publication of application: 02.01.2004
(73) Proprietor: Chang, Chih-Jung, Chia-Yi City (TW)
(72) Inventor: Chang, Chih-Jung, Chia-Yi City (TW)
(74) Representative: Rees, Alexander Ellison

(56) References cited:
- DE-U- 20 113 804
- US-A- 2 767 391

## Description

The invention relates to a bicycle pedal, more particularly to a light-generating bicycle pedal, according to the preamble of claim 1. DE-4-20113804 shows such a bicycle pedal.

It is known in the art to provide a bicycle pedal with a light-reflective strip for enhanced safety when driving at night. However, the light-reflective strip will be able to serve its alerting purpose only when a light beam is radiated thereon. In addition, the light-reflective strip is likely to fall off or be covered with dirt after long-term use.

Therefore, the main object of the present invention is to provide a light-generating bicycle pedal capable of overcoming the aforesaid drawbacks associated with the use of light-reflective strips.

Another obj ect of the present invention is to provide a light-generating bicycle pedal having simple interconnections among components of a light-generating unit thereof as compared with the pedal as shown in DE-U-20113804.

These objects are solved by a light-generating bicycle pedal according to claim 1.

Accordingly, a light-generating bicycle pedal of this invention comprises:
a pedal body formed with a tubular axle sleeve having an axle hole with front and rear ends, a cage member disposed around and connected to the axle sleeve, and a generator chamber disposed adjacent to one of the front and rear ends of the axle hole, the cage member including a pair of lateral cage portions that extend parallel to the axle sleeve and that are disposed respectively on opposite lateral sides of the axle sleeve, at least one of the lateral cage portions having an outer wall surface formed with a board receiving cavity;
an axle extending into the axle hole and coupled rotatably to the axle sleeve; and
a light-generating unit including a magnet wheel disposed in the generator chamber and mounted coaxially and co-rotatably on the axle, a coil device disposed in the generator chamber around the magnet wheel and mounted on the pedal body, and a lamp unit connected electrically to the coil device and mounted on the cage member.

The coil device includes a spool, a coil wound around the spool, and a pair of conductive caps capped on an assembly of the spool and the coil . Each of the conductive caps is connected electrically to a respective end of the coil. The conductive caps are formed with a set of anchoring lugs.

The lamp unit includes a circuit board received in the board receiving cavity and having at least one lamp mounted thereon. The circuit board is formed with a set of anchoring holes that permit extension of the set of anchoring lugs therein so as to establish electrical connection between the lamp unit and the coil device.

Rotation of the axle relative to the pedal body results in rotation of the magnet wheel relative to the coil device, thereby inducing electrical currents in the coil device that are provided to the lamp unit via the anchoring lugs on the conductive caps so as to enable the lamp unit to generate a light output.

Other features and advantages of the present invention will become apparent in the following detailed description of the preferred embodiment with reference to the accompanying drawings, of which:
Figure 1 is a perspective view showing a preferred embodiment of a bicycle pedal according to the present invention when mounted on one end of a crank;
Figure 2 is an exploded perspective view of the preferred embodiment;
Figure 3 is a sectional schematic view of the preferred embodiment;
Figure 4 is a partly sectional view of the preferred embodiment to illustrate the connection between a coil device and a lamp unit; and
Figure 5 is an exploded perspective view showing a light-generating unit of the preferred embodiment.

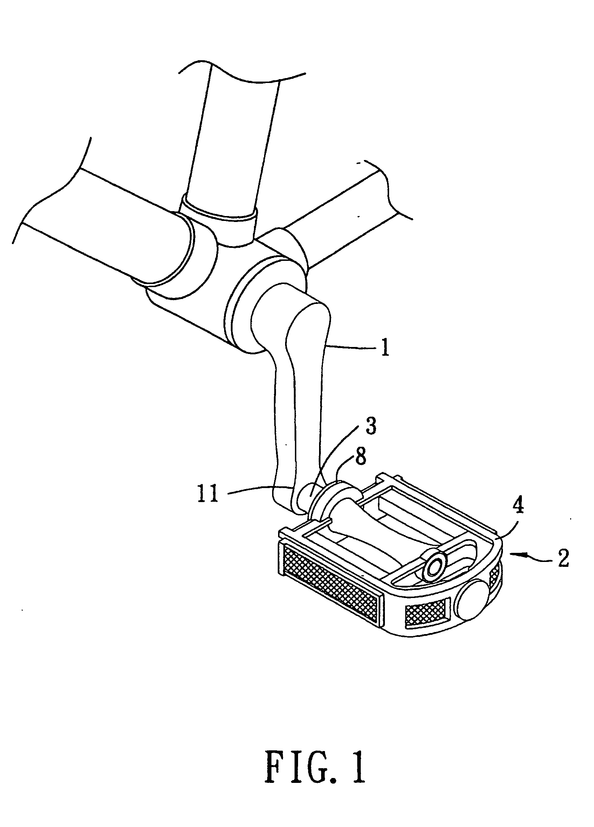

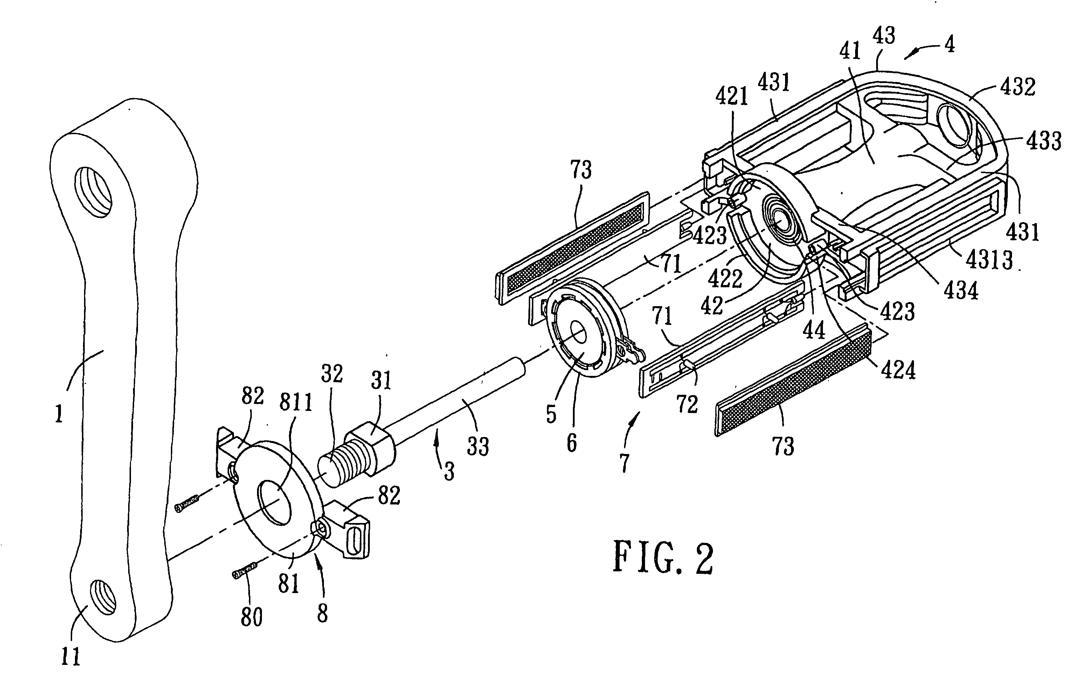

Referring to Figures 1 and 2 , the preferred embodiment of a light-generating bicycle pedal 2 according to the present invention is shown to be adapted to be mounted on one end portion 11 of a crank 1. The bicycle pedal 2 includes an axle 3, a pedal body 4, a cover plate 8 and a light-generating unit.

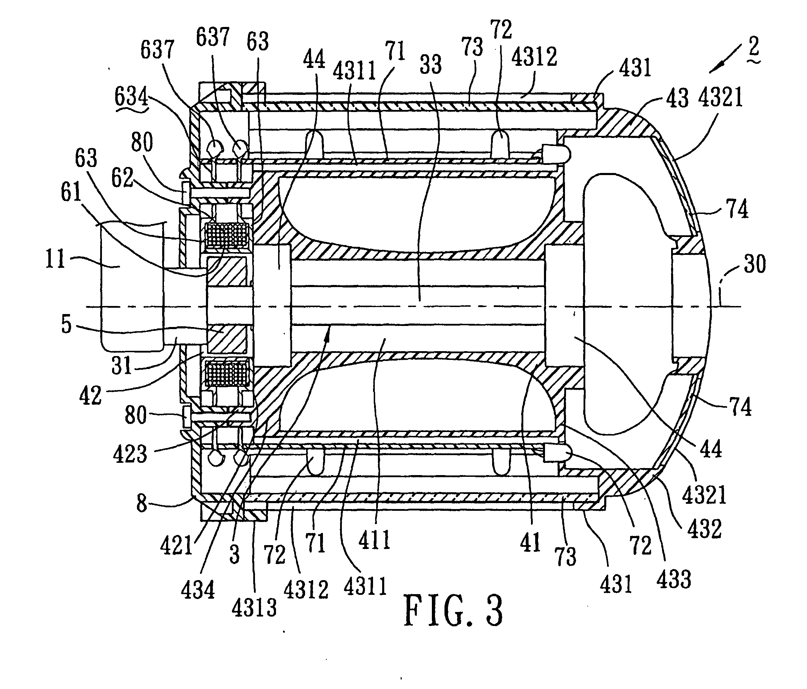

The pedal body 4 is formed with a tubular axle sleeve 41 having an axle hole 411 (see Fig. 3) with front and rear ends, a cage member 43 disposed around and connected to the axle sleeve 41, and a generator chamber 42 disposed adjacent to the rear end of the axle hole 411. A pair of axle bearings 44 are disposed in the axle hole 411 for smoothening the relative rotation between the axle 3 and the pedal body 4.

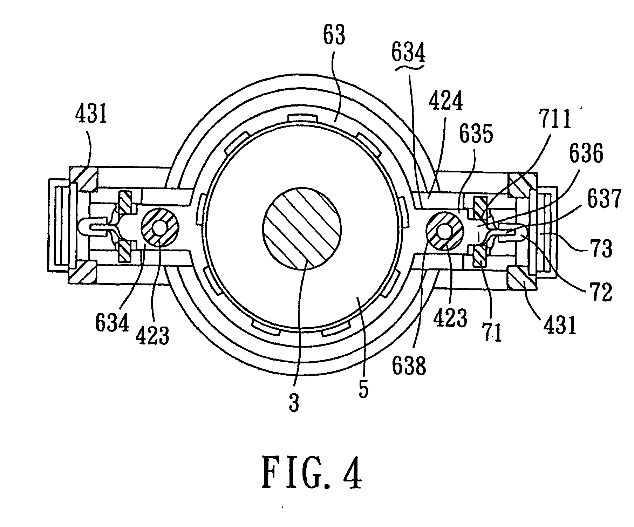

Referring further to Figures 3 and 4, the cage member 43 includes a pair of lateral cage portions 431 that extend parallel to the axle sleeve 41 and that are disposed respectively on opposite lateral sides of the axle sleeve 41, a bridging portion 432 that interconnects front ends of the lateral cage portions, and a front end wall 433 and a rear end wall 434, each of which interconnects the axle sleeve 41 and the lateral cage portions 431. In this embodiment, each of the lateral cage portions 431 has an outer wall surface 4313 formed with a board receiving cavity 4311 and a plate receiving cavity 4312 . The plate receiving cavity 4312 is disposed outboard relative to the board receiving cavity 4311. Each board receiving cavity 4311 and plate receiving cavity 4312 has an open rear end at the rear end wall 434. The bridging portion 432 is formed with two lamp holes 4321. The front end wall 433 is formed with two lamp-mounting holes that are registered with the lamp holes 4321, respectively. The generator chamber 42 is confined by an annular base 421 on the rear end wall 434, and an annular wall 422 that extends from the periphery of the annular base 421. The annular wall 422 is formed with a pair of notches 424 . Each of two mounting posts 423 projects from the rear end wall 434 and into a respective one of the notches 424.

The axle 3 has an axis 30 and is formed with a pedal coupling portion 33 that extends into the axle hole 411 and that is coupled rotatably to the axle sleeve 41 via the axle bearings 44, a crank coupling portion 32 that extends rearwardly and coaxially from the pedal coupling portion 33, that extends out of the rear end of the axle hole 411 and the generator chamber 42 , and that is adapted to be secured to the end portion 11 of the crank 1, and an annular flange 31 that is disposed between the pedal coupling portion 33 and the crank coupling portion 32 to limit threaded engagement between the crank coupling portion 32 and the crank 1.

The light-generating unit includes a magnet wheel 5 disposed in the generator chamber 42 and mounted coaxially and co-rotatably on the axle 3, a coil device 6 disposed in the generator chamber 42 around the magnet wheel 5 and mounted on the pedal body 4, and a lamp unit 7 connected electrically to the coil device 6 and mounted on the cage member 43.

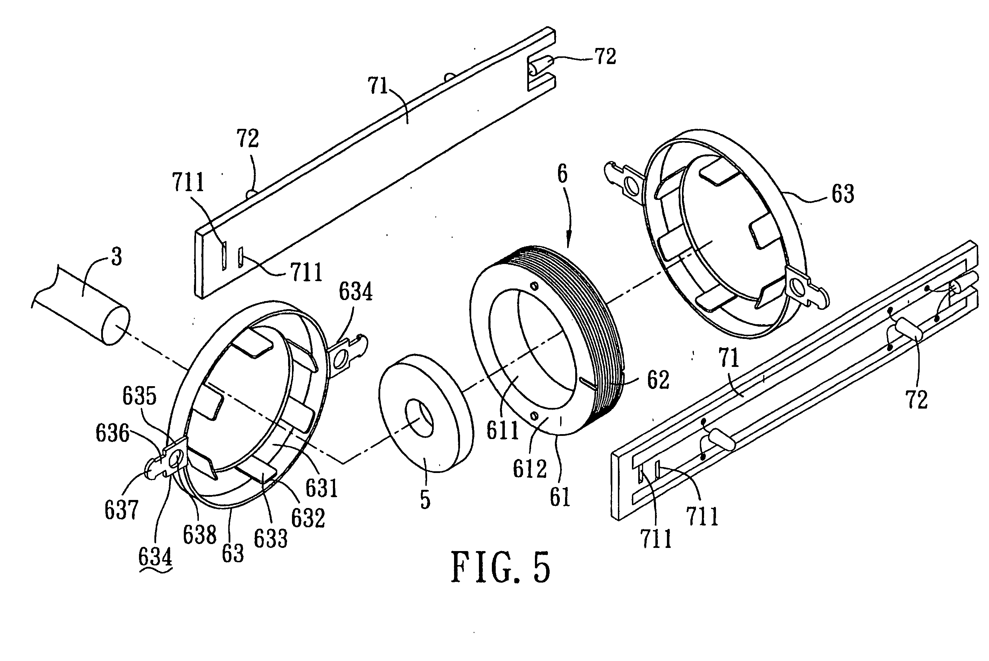

Referring further to Figure 5, the coil device 6 includes a spool 61, a coil 62 wound around the spool 61, and a pair of conductive caps 63 capped on an assembly of the spool 61 and the coil 62. The spool 61 includes an enveloping ring 611 that surrounds the magnet wheel 5 along the axis 30 and a pair of horizontal rings 612, each of which extends radially relative to the axis 30 from one peripheral rim of the enveloping ring 611 . Each of the conductive caps 63 is connected electrically to a respective end of the coil 62. Each conductive cap 63 includes a horizontal ring 631 that extends in radial directions relative to the axis 30 and that has an inner circular edge and an outer circular edge, an annular wall 632 that extends perpendicularly from the outer circular edge of the horizontal ring 631, a plurality of finger plates 633 that extend perpendicularly and spacedly from the inner circular edge of the horizontal ring 631, and a pair of anchoring lugs 634 that extend radially outward from the annular wall 632 and that are diametrically opposite to each other. Each of the anchoring lugs 634 includes a wider base section 635 extending from the conductive cap 63 and matching the corresponding notch 424 in the annular wall 422, a restricted neck section 636 extending from the base section 635, and a head section 637 extending from the neck section 636. The base section 635 is formed with a positioning hole 638 to permit the mounting post 423 in the corresponding notch 424 to pass therethrough.

In this embodiment, the lamp unit 7 includes two circuit boards 71 and a plurality of lamps 72 mounted on the circuit boards 71. Each of the circuit boards 71 is inserted into a respective board receiving cavity 4311 via an open rear end of the latter, and has an end portion that is formed with a set of anchoring holes 711 and that extends out of the open rear end of the respective board receiving cavity 4311. Each anchoring hole 711 permits extension of one of the anchoring lugs 634 therein so as to establish electrical connection between the lamp unit 7 and the coil device 6. In this embodiment, the restricted neck section 636 of the anchoring lugs 636 extends into the respective anchoring hole 711, and the head section 637 is subsequently twisted relative to the restricted neck section 636 to interconnect the circuit board 71 and the coil device 6. The lamps 72 are distributed on the circuit boards 71. Two of the lamps 72 extend into the lamp-mounting holes in the front end wall 433. Each of two light-transmissive cover plates 73 is inserted into a respective plate receiving cavity 4312 via the open rear end of the latter so as to cover the adjacent board receiving cavity 4311. Each of two light-transmissive cover plates 74 is mounted on the bridge portion 432 to close a respective lamp hole 4321.

Referring back to Figures 2 and 3, the cover plate 8 is mounted on the pedal body 4 at the mounting posts 423 via screws 80. The cover plate 8 includes a planar ring 81 to cover the generator chamber 42, and a pair of winged portions 82 radially extending from the planar ring 81 to cover the open rear ends of the board receiving cavities 4311 and the plate receiving cavities 4312. The cover plate 8 is formed with an axle hole 811 for extension of the crank coupling portion 32 therethrough.

Referring to Figures 2, 3 and 5, during assembly, the coil 62 is first wound around the spool 61, and the conductive caps 63 are then disposed to enclose the spool 61. Thereafter, the anchoring lugs 634 on the conductive caps 63 are extended through the anchoring holes 711 in the circuit boards 71. After the head sections 637 of the anchoring lug 634 are extended out of the anchoring holes 711 and are twisted by a 90 angle relative to the restricted neck sections 636, electrical connection between the coil device 6 and each circuit board 71 is established. Then, each of the circuit boards 71 is inserted into the respective board receiving cavity 4311, each of the light-transmissive cover plates 73 is inserted into the respective plate receiving cavity 4313 , and each of the light-transmissive cover plates 74 is mounted on the bridge portion 432. Finally, the cover plate 8 is mounted on the pedal body 4 to complete the assembly process.

In use, rotation of the axle 3 relative to the pedal body 4 results in rotation of the magnet wheel 5 relative to the coil device 6, thereby inducing electrical currents in the coil device 6 that are provided to the lamp unit 7 via the anchoring lugs 634 on the conductive caps 63 so as to enable the lamp unit 7 to generate a light output. The light-transmissive cover plates 73, 74 enhance dispersion of light from the lamps 72 to yield a better alarming effect.

In view of the use of the anchoring lugs 634 for interconnecting the coil device 6 and the lamp unit 7, the manufacturing process of the light-generating bicycle pedal of this invention is accordingly simplified.

## Claims

1. A light-generating bicycle pedal (2) comprising:
a pedal body (4) formed with a tubular axle sleeve (41) having an axle hole (411) with front and rear ends, a cage member (43) disposed around and connected to the axle sleeve (41), and a generator chamber (42) disposed adjacent to one of the front and rear ends of the axle hole (411), the cage member (43) including a pair of lateral cage portions (431) that extend parallel to the axle sleeve (41) and that are disposed respectively on opposite lateral sides of the axle sleeve (41) , at least one of the lateral cage portions (431) having an outer wall surface (4313) formed with a board receiving cavity (4311) ;
an axle (3) extending into the axle hole (411) and coupled rotatably to the axle sleeve (41); and
a light-generating unit including a magnet wheel (5) disposed in the generator chamber (42) and mounted coaxially and co-rotatably on the axle (3), a coil device (6) disposed in the generator chamber (42) around the magnet wheel (5) and mounted on the pedal body (4), and a lamp unit (7) connected electrically to the coil device (6) and mounted on the cage member (43);
the lamp unit (7) including a circuit board (71) received in the board receiving cavity (4311) and having at least one lamp (72) mounted thereon;
**characterized by**:
the coil device (6) including a spool (61), a coil (62) wound around the spool (61), and a pair of conductive caps (63) capped on an assembly of the spool (61) and the coil (62), each of the conductive caps (63) being connected electrically to a respective end of the coil (62), the conductive caps (63) being formed with a set of anchoring lugs (634) ;
the circuit board (71) being formed with a set of anchoring holes (711) that permit extension of the set of anchoring lugs (634) therein so as to establish electrical connection between the lamp unit (7) and the coil device (6);
wherein rotation of the axle (3) relative to the pedal body (4) results in rotation of the magnet wheel (5) relative to the coil device (6), thereby inducing electrical currents in the coil device (6) that are provided to the lamp unit (7) via the anchoring lugs (634) on the conductive caps (63) so as to enable the lamp unit (7) to generate a light output.

2. The light-generating bicycle pedal (2) as claimed in Claim 1, **characterized in that** each of the anchoring lugs (634) includes:
a wider base section (635) extending from one of the conductive caps (63) ;
a restricted neck section (636) extending from the base section (635) and into one of the anchoring holes (711); and
a head section (637) extending from the neck section (636) and twisted relative to the neck section (636) to interconnect the circuit board (71) and the coil device (6).

3. The light-generating bicycle pedal (2) as claimed-in Claim 1, **characterized in that** the board receiving cavity (4311) has an open rear end, the circuit board (71) being inserted into the board receiving cavity (4311) via the open rear end and having an end portion that is formed with the anchoring holes (711) and that extends out of the open rear end of the board receiving cavity (4311) .

4. The light-generating bicycle pedal (2) as claimed in Claim 3, further **characterized in that** the outer wall surface (4313) of said at least one of the lateral cage portions (431) is further formed with a plate receiving cavity (4312) that is disposed outboard relative to the board receiving cavity (4311) and that has an open rear end, a light-transmissive plate (73) being inserted into the plate receiving cavity (4312) via the open rear end of the plate receiving cavity (4312) so as to cover the board receiving cavity (4311).

5. The light-generating bicycle pedal (2) as claimed in Claim 3, further **characterized in that** the generator chamber (42) is formed adjacent to the rear end of the axle hole (411) , the axle (3) being formed with a pedal coupling portion (33) that extends into the axle hole-(411) and that is coupled rotatably to the axle sleeve (41), and a crank coupling portion (32) that extends rearwardly and coaxially from the pedal coupling portion (33), that extends out of the rear end of the axle hole (411) and the generator chamber (42) , and that is adapted to be secured to a crank (1).

6. The light-generating bicycle pedal (2) as claimed in Claim 5, further **characterized in that** the cage member (43) has a rear end wall (434) that interconnects the axle sleeve (41) and the lateral cage portions (431), the generator chamber (42) being confined by an annular wall (422) that extends from the rear end wall (434), the annular wall (422) being formed with a notch (424) that permits the anchoring lugs (634) to extend therethrough.

7. The light-generating bicycle pedal (2) as claimed in Claim 6, further **characterized in that** the rear end wall (434) has a mounting post (423) projecting into the notch (424) , each of the anchoring lugs (634) being formed with a positioning hole (638) to permit extension of the mounting post (423) therethrough.

8. The light-generating bicycle pedal (2) as claimed in Claim 7, further **characterized by** a cover plate (8) mounted on the pedal body (4) at the mounting post (423) to cover the generator chamber (42) and the open rear end of the board receiving cavity (4311) , the cover plate (8) being formed with an axle hole (811) to permit extension of the crank coupling portion (32) therethrough.

9. The light-generating bicycle pedal (2) as claimed in Claim 1, **characterized in that** the cage member (43) includes a front end wall (433) interconnecting the axle sleeve (41) and the lateral cage portions (431), the front end wall (433) being formed with a lamp-mounting hole, the lamp (72) on the circuit board (71) extending into the lamp-mounting hole.

10. The light-generating bicycle pedal (2) as claimed in Claim 9, further **characterized in that** the cage member (43) further includes a bridging portion (432) that interconnects front ends of the lateral cage portions (431), the bridging portion (432) being formed with a lamp hole (4321) that is registered with the lamp (72) in the lamp-mounting hole, a light-transmissive cover plate (74) being mounted on the bridging portion (432) to close the lamp hole (4321).

## Patentansprüche

1. Leuchtpedal (2) für ein Fahrrad umfassend:
einen Pedalkörper (4), der mit einer rohrföhrmigen Achsbuchse (41) ausgebildet ist, die eine axiale Bohrung (411) an vorderen und hinteren Enden hat, einen Rahmenteil (43), der um die Achsbuchse (41) herum angeordnet und damit verbunden ist, und eine Generatorkammer (42) aufweist, die neben dem vorderen oder dem hinteren Ende der Achsenbohrung (411) angeordnet ist, wobei der Rahmenteil (43) ein paar seitlicher Rahmenabschnitte (431) umfaßt, die sich parallel zu der Achsbuchse (41) erstrecken und die auf gegenüberliegenden Seiten der Achsbuchse (41) respektive angeordnet sind, wobei wenigstens einer der seitlichen Rahmenabschnitte (431) eine äußere Wandoberfläche (4313) hat, die mit einer eine Platte aufnehmenden Ausnehmung (4311) ausgebildet ist;
eine Achse (3), die sich in die Achsbohrung (411) erstreckt und drehbar mit der Achsbuchse (41) gekoppelt ist;
eine Lichtgeneratoreinheit, die ein Magnetrad (5), das in der Generatorkammer (42) angeordnet und koaxial und auf der Achse (3) damit drehbar montiert ist, eine Spuleneinrichtung (6), die in der Generatorkammer (42) um das Magnetrad herum angeordnet und auf dem Pedalkörper (4) montiert ist, und eine Lampeneinheit (7) aufweist, die elektrisch mit der Spuleneinrichtung (6) verbunden und an dem Rahmenteil (43) montiert ist;
wobei die Lampeneinheit (7) eine Schaltungsplatte (71) umfaßt, die in der die Platte empfangenden Ausnehmung (4311) aufgenommen ist und wenigstens eine Lampe (72) darauf montiert hat,
**dadurch gekennzeichnet,**
**daß** die Spuleneinrichtung (6), die eine Spule (61), eine Spule (62), die um die Spule (61) herum gewickelt ist, und zwei leitfähige Kappen (63), die über die Einrichtung der Spule (61) und der Spule (62) gestülpt ist, aufweist, wobei jede der leitfähigen Kappen (63) elektrisch mit einem entsprechenden Ende der Spule (62) verbunden ist, und wobei die leitfähigen Kappen (63) mit einem Satz von Verankerungszungen (634) ausgebildet sind;
**daß** die Schaltungsplatte (71) mit einem Satz von Verankerungsbohrungen (711) ausgebildet ist, die es ermöglichen, daß der Satz der Verankerungszungen (634) sich in dieser erstreckt, um eine elektrische Verbindung zwischen der Lampeneinheit (7) und der Spuleneinrichtung (6) herzustellen;
wobei eine Drehung der Achse (3) relativ zu dem Pedalkörper (4) in einer Drehung des Magnetrades (5) relativ zu der Spuleneinrichtung (6) resultiert, so daß elektrische Ströme in die Spuleneinrichtung (6) induziert werden, die an die Lampeneinheit (7) über die Verankerungszungen (634) auf den leitfähigen Kappen (63) beliefert werden, um es der Lampeneinheit (7) zu ermöglichen, eine Lichtabstrahlung zu erzeugen.

2. Leuchtpedal (2) für ein Fahrrad nach Anspruch 1, **dadurch gekennzeichnet, daß** jede der Verankerungszungen (634) umfaßt:
einen breiteren Basisabschnitt (635), der sich von einer der leitfähigen Kappen (63) weg erstreckt;
einen eingezogenen Nackenabschnitt (636), der sich von dem Basisabschnitt (635) weg und in die Verankerungsbohrungen (711) erstreckt; und
einen Kopfabschntit (637), der sich von dem Nackenabschntit (636) weg erstreckt und gegenüber dem Nackenabschnitt (636) erstreckt und gegenüber dem Nackenabschnitt (636) verdreht ist, um die Schaltungsplatte (71) und die Spuleneinrichtung (6) miteinander zu verbinden.

3. Leuchtpedal (2) für ein Fahrrad nach Anspruch 1, **dadurch gekennzeichnet, daß** die die Platte aufnehmende Ausnehmung (4311) ein offenes hinteres Ende hat, wobei die Schaltungsplatte (71) in die die Platte aufnehmende Ausnehmung (4311) über das offene hintere Ende eingeführt ist und einen Endabschnitt hat, der mit den Verankerungsbohrungen (711) versehen ist und sich aus dem offenen hinteren Ende der die Platte aufnehmenden Ausnehmung (4311) erstreckt.

4. Leuchtpedal (2) für ein Fahrrad nach Anspruch 3, ferner **dadurch gekennzeichnet, daß** die äußere Wandoberfläche (4313) von dem wenigstens einen seitlichen Rahmenabschnitt (431) ferner mit einer eine Platte aufnehmenden Ausnehmung (4312) ausgebildet ist, die außenbords relativ zu der die Platte aufnehmenden Ausnehmung (4311) geordnet ist und ein offenes hinteres Ende hat, wobei eine lichtdurchlässige Platte (73) in die eine Platte aufnehmende Ausnehmung (4312) über das offene hintere Ende der die Platte aufnehmenden Ausnehmung (4312) eingesetzt ist, so daß sie die eine Platte aufnehmende Ausnehmung (4311) abdeckt.

5. Leuchtpedal (2) für ein Fahrrad nach Anspruch 3, femer **dadurch gekennzeichnet, daß** die Generatorkammer (42) neben dem hinteren Ende der Achsbohrung (411) ausgebildet ist, daß die Achse (3) mit einem Pedalkupplungsabschnitt (33), der sich in die Achsbohrung (411) erstreckt und der drehbar mit der Achsbuchse (41) verbunden ist, und mit einem Kurbelkupplungsabschnitt (32) ausgebildet ist, der sich rückwärts und koaxial von dem Pedalkupplungsabschnitt (33) erstreckt, der sich aus dem hinteren Ende der Achsbohrung (411) und der Generatorkammer (42) erstreckt und der geeignet ist, an einer Kurbel (1) befestigt zu werden.

6. Leuchtpedal (2) für ein Fahrrad nach Anspruch 5, ferner **dadurch gekennzeichnet, daß** der Rahmenteil (43) eine hintere Endwand (434) hat, die die Achsbuchse (41) und die seitlichen Rahmenabschnitte (431) verbindet, daß die Generatorkammer (42) durch eine Ringwand (422) umschlossen ist, die sich von der hinteren Endwand (434) weg erstreckt, und daß die Ringwand (422) mit einer Aussparung (424) ausgebildet ist, die es ermöglichen, daß die Verankerungszungen (634) sich durch sie hindurch erstrecken.

7. Leuchtpedal (2) für ein Fahrrad nach Anspruch 6, ferner **dadurch gekennzeichnet, daß** die hintere Endwand (434) einen Montagezapfen (423) aufweist, der in die Aussparung (424) vorsteht,
wobei jede der Verankerungszungen (634) mit einer Positionierungsbohrung (638) ausgebildet ist, um es zu ermöglichen, daß sich der Montagezapfen (423) durch sie hindurch erstreckt.

8. Leuchtpedal (2) für ein Fahrrad nach Anspruch 7, ferner **gekennzeichnet durch** eine Abdeckplatte (8), die auf dem Pedalkörper (4) an dem Montagezapfen (423) montiert ist, um die Generatorkammer (42) und das offene hintere Ende der eine Platte aufnehmenden Ausnehmung (4311) abzudecken, wobei die Abdeckplatte (8) mit einer Achsbohrung (811) ausgebildet ist, um es zu gestatten, daß der Kurbelkupplungsabschnitt (32) sich **durch** sie hindurch erstreckt.

9. Leuchtpedal (2) für ein Fahrrad nach Anspruch 1, **dadurch gekennzeichnet, daß** der Rahmenteil (43) eine vordere Endwand (433) aufweist, die die Achsbuchse (41) und die seitlichen Rahmenabschnitte (431) miteinander verbindet, wobei die vordere Endwand (433) mit einer Lampenmontagebohrung ausgebildet ist, wobei die Lampe (72) der Schaltungsplatte (71) sich in die Lampenmontagebohrung erstreckt.

10. Leuchtpedal (2) für ein Fahrrad nach Anspruch 9, ferner **dadurch gekennzeichnet, daß** der Rahmenteil (43) ferner einen Brückenabschnitt (432) aufweist, der vordere Enden der seitlichen Rahmenabschnitte (431) miteinander verbindet, wobei der Brückenabschnitt (432) mit einer Lampenbohrung (4321) ausgebildet ist, die mit der Lampe in der Lampenmontagbohrung ausgerichtet ist, wobei eine lichtdurchlässige Deckplatte (74) auf dem Brückenabschnitt (432) montiert ist, um die Lampenbohrung (4321) zu schließen.

## Revendications

1. Pédale de bicyclette génératrice de lumière (2) comprenant :
un corps de pédale (4) formé avec un manchon d'axe tubulaire (41) ayant un trou d'axe (411) avec des extrémités avant et arrière, un élément de cage (43) placé autour et connecté au manchon d'axe (41), une chambre génératrice (42) placée à côté de l'une des extrémités avant et
arrière du trou d'axe (411), l'élément de cage (43) incluant une paire de parties de cage latérales (431) qui s'étendent parallèlement au manchon d'axe (41) et qui sont placées respectivement sur les côtés latéraux opposés du manchon d'axe (41), au moins l'une des parties de cage latérales (431) ayant une surface de paroi extérieure (4313) formée avec une cavité de réception de carte (4311) ;
un axe (3) s'étendant dans le trou d'axe (411) et couplé de manière rotative au manchon d'axe (41) ; et
une unité génératrice de lumière incluant une roue magnétique (5) placée dans la chambre génératrice (42) et montée de manière coaxiale et en co-rotation sur l'axe (3), un dispositif de bobine (6) placé dans la chambre génératrice (42) autour de la roue magnétique (5) et montée sur le corps de pédale (4), et une unité de lampe (7) connectée électriquement au dispositif de bobine (6) et montée sur l'élément de cage (43) ;
l'unité de lampe (7) incluant une carte de circuit imprimé (71) reçue dans la cavité de réception de carte (4311) et ayant au moins une lampe (72) montée dessus ;
**caractérisée en ce que**
le dispositif de bobine (6) comprend une bobine (61), un filament (62) entourée autour de la bobine (61), et une paire de capuchons conducteurs (63) placés sur un ensemble de la bobine (61) et du filament (62), chacun des capuchons conducteurs (63) étant connecté électriquement à une extrémité respective du filament (62, les capuchons conducteurs (63) étant formés avec une série de pattes d'ancrage (634) ;
la carte de circuit imprimé (71) est formée avec une série de trous d'ancrage (711) qui permettent l'extension de la série de pattes d'ancrage (634) à l'intérieur de manière à établir la connexion électrique entre l'unité de lampe (7) et le dispositif de bobine (6) ;
la rotation de l'axe (3) par rapport au corps de pédale (4) entraîne la rotation de la roue magnétique (5) par rapport au dispositif de bobine (6), induisant de ce fait des courants électriques dans le dispositif de bobine (6) qui alimentent l'unité de lampe (7) par les pattes d'ancrage (634) sur les capuchons conducteurs (63) afin de permettre à l'unité de lampe (7) de générer une sortie de lumière.

2. Pédale de bicyclette génératrice de lumière (2) selon la revendication 1,
**caractérisée en ce que**
chacune des pattes d'ancrage (634) comprend :
une section de base plus large (635) s'étendant depuis l'un des capuchons conducteurs (63) ;
une section de col restreinte (635) s'étendant depuis la section de base (635) et dans l'un des trous d'ancrage (711) ; et
une section de tête (637) s'étendant depuis la section de col (636) et torsadée par rapport à la section de col (636) pour assurer l'interconnexion de la carte de circuit imprimé (71) et du dispositif de bobine (6).

3. Pédale de bicyclette génératrice de lumière (2) selon la revendication 1,
**caractérisée en ce que**
la cavité de réception de carte (4311) possède une extrémité arrière ouverte, la carte de circuit imprimé (71) étant insérée dans la cavité de réception de carte (4311) par l'extrémité arrière ouverte et ayant une partie d'extrémité qui est formée par les trous d'ancrage (711) et qui s'étend hors de l'extrémité arrière ouverte de la cavité de réception de carte (4311).

4. Pédale de bicyclette génératrice de lumière (2) selon la revendication 3, en outre
**caractérisée en ce que**
la surface de paroi extérieure (4313) de ladite au moins une des parties de cage latérales (431) est en outre formée avec une cavité de réception de plaque (4312) qui est placée à l'extérieur de la carte par rapport à la cavité de réception de carte (4311) et qui possède une extrémité arrière ouverte, une plaque transmissive de lumière (73) étant insérée dans la cavité de réception de plaque (4312) par l'extrémité arrière ouverte de la cavité de réception de plaque (4312) de manière à couvrir la cavité de réception de carte (4311).

5. Pédale de bicyclette génératrice de lumière (2) selon la revendication 3, en outre
**caractérisée en ce que**
la chambre génératrice (42) est formée à côté de l'extrémité arrière du trou d'axe (411), l'axe (3) étant formé avec une partie de couplage de pédale (33) qui s'étend dans le trou d'axe (411) et qui est couplée de manière rotative au manchon d'axe (41), et avec une partie de couplage de bras de manivelle (32) qui s'étend vers l'arrière et de manière coaxiale depuis la partie de couplage de pédale (33), qui s'étend hors de l'extrémité arrière du trou d'axe (411) et la chambre génératrice (42), et qui est adaptée pour être fixée à un bras de manivelle (1).

6. Pédale de bicyclette génératrice de lumière (2) selon la revendication 5, en outre
**caractérisée en ce que**
l'élément de cage (43) possède une paroi d'extrémité arrière (434) qui assure l'interconnexion du manchon d'axe (41) et des portions de cage latérales (431), la chambre génératrice (42) étant confinée par une paroi annulaire (422) qui s'étend depuis la paroi d'extrémité arrière (434), la paroi annulaire (422) étant formée avec une encoche (424) qui permet aux pattes d'ancrage (634) de s'étendre à travers.

7. Pédale de bicyclette génératrice de lumière (2) selon la revendication 6, en outre
**caractérisée en ce que**
la paroi d'extrémité arrière (434) possède un montant (423) se projetant dans l'encoche (424), chacune des pattes d'ancrage (634) étant formée avec un trou de positionnement (638) pour permettre l'extension du montant (423) à travers.

8. Pédale de bicyclette génératrice de lumière (2) selon la revendication 7, en outre
**caractérisée par**
une plaque couvercle (8) montée sur le corps de pédale (4) au niveau du montant (423) pour couvrir la chambre génératrice (42) et l'extrémité arrière ouverte de la cavité de réception de carte (4311), la plaque couvercle (8) étant formée avec un trou d'axe (811) pour permettre l'extension de la partie de couplage de bras de manivelle (32) à travers.

9. Pédale de bicyclette génératrice de lumière (2) selon la revendication 1, en outre
**caractérisée en ce que**
l'élément de cage (43) inclut une paroi d'extrémité avant (433) assurant l'interconnexion du manchon d'axe (41) et des portions de cage latérales (431), la paroi d'extrémité avant (433) étant formée avec un trou de montage de lampe, la lampe (72) sur la carte de circuit imprimé (71) s'étendant dans le trou de montage de lampe.

10. Pédale de bicyclette génératrice de lumière (2) selon la revendication 9, en outre
**caractérisée en ce que**
l'élément de cage (43) comprend en outre une partie de pontage (432) qui assure l'interconnexion des extrémités avant des parties de cage latérales (431), la partie de pontage (432) étant formée avec un trou de lampe (4321) qui est fixée avec la lampe (72) dans le trou de montage de lampe, une plaque couvercle transmissive de lumière (74) étant montée sur la partie de pontage (432) pour fermer le trou de lampe (4321).
